# EUROPÄISCHE PATENTSCHRIFT

(11) **EP 1 901 934 B1**
(45) Veröffentlichungstag und Bekanntmachung des Hinweises auf die Patenterteilung: **12.08.2009**
(21) Anmeldenummer: 06754129.2
(22) Anmeldetag: 06.06.2006
(51) Int. Cl.: B60G 17/052

(54) **LUFTFEDERUNGSANLAGE FÜR EIN KRAFTFAHRZEUG**
PNEUMATIC SHOCK ABSORBING SYSTEM FOR A MOTOR VEHICLE
SYSTEME DE SUSPENSION PNEUMATIQUE POUR AUTOMOBILE

(30) Priorität: 01.07.2005 DE 102005030726
(43) Veröffentlichungstag der Anmeldung: 26.03.2008
(73) Patentinhaber: Continental Aktiengesellschaft, 30165 Hannover (DE)
(72) Erfinder: REHRA, Günter, 30900 Wedemark (DE); STILLER, Alexander, 30823 Garbsen (DE); GROTENDORST, Jörg, 30823 Garbsen (DE); RABE, Dirk-Heinrich, 31535 Neustadt (DE)
(74) Vertreter: Finger, Karsten
(86) Internationale Anmeldenummer: PCT/EP2006/005351
(87) Internationale Veröffentlichungsnummer: WO 2007/003252

(56) Entgegenhaltungen:
- DE-A1- 10 055 108

## Beschreibung

Die Erfindung betrifft eine Luftfederungsanlage für ein Kraftfahrzeug, mit mindestens einer Luftfeder pro Kraftfahrzeugrad an mindestens einer Fahrzeugachse, mindestens einem Steuergerät, mindestens einem Verdichter, mindestens einem Drucksensor, mindestens einem Schaltventil und mindestens einer Verbindungsleitung.

Eine derartige Luftfederungsanlage ist aus der DE10055108A1 bekannt. Die dargestellte Luftfederungsanlage basiert auf einem teil-geschlossenen bzw. geschlossenen Druckluftsystem, d.h. die nicht mehr benötigte Luft aus den Luftfedern wird von dem Verdichter in einen Druckspeicher gepumpt. Ebenso kann für eine Niveauerhöhung des Fahrzeugaufbaus gegenüber mindestens einer Fahrzeugachse Druckluft aus dem Druckspeicher in die Luftfedern überführt werden. Das ganze System, also Luftfedern, Druckspeicher, Leitungen, Ventile und Verdichter werden mit Druckluft vorbefüllt. Das Vorbefüllen erfolgt bei einem Neufahrzeug im Montagewerk mit Hilfe einer Fremddruckluftquelle, wobei die Vorbefüllung und Ansteuerung der Ventile von einer externen elektrischen Steuerung durchgeführt wird. Im Service- oder Reparaturfall kann die Vorbefüllung eventuell auch durch den fahrzeugeigenen Verdichter erfolgen.

Der vorliegenden Erfindung liegt die Aufgabe zugrunde, eine Luftfederungsanlage zu schaffen, welche mit einem geringen technischen Aufwand vorbefüllt werden kann.

Die Aufgabe wird durch die Merkmale des Anspruchs 1 gelöst. Dazu wird die Verbindungsleitung mit einer externen Druckluftquelle verbunden, das Steuergerät der Luftfederungsanlage erhält ein Startsignal zur Grundbefüllung und mindestens ein Ventil wird vom Steuergerät so angesteuert, dass eine Grundbefüllung der Luftfederungsanlage erfolgt. Der Vorteil ist darin zu sehen, dass für die Grundbefüllung der Luftfederungsanlage durch eine externe Druckluftquelle keine separate externe Steuerungseinrichtung erforderlich ist, was Kosten einspart und den Aufbau der externen Befüllvorrichtung wesentlich vereinfacht. Weiterhin ist eine Grundbefüllung der Luftfederungsanlage im Reparaturfall auch in kleineren Werkstätten möglich, welche nicht auf die Reparatur von Luftfederungsanlagen spezialisiert und dementsprechend ausgerüstet sind.

Die Luftfederungsanlage weist bekannterweise mindestens zwei Luftfedern auf, welche den Fahrzeugaufbau gegenüber den Radträgern einer Fahrzeugachse federn und/oder bedämpfen. Eine Grund- oder Erstbefüllung dieser offenen, halb-offenen oder geschlossenen Luftfederungsanlage ist nach der Erstmontage oder im Reparaturfall, wenn z.B. eine Luftfeder oder eine Verbindungsleitung ausgetauscht worden sind, erforderlich. In diesem Fall wird eine externe Druckluftquelle an einen Anschluss der Verbindungsleitung der Luftfederungsanlage angeschlossen. Das Steuergerät erhält ein Signal zum Starten der Grundbefüllung der Luftfederungsanlage mit der Druckluft der externen Druckluftquelle. Das Startsignal kann durch eine von einem externen Bediener zu betätigende Schaltvorrichtung im Fahrzeuginnenraum oder durch einen von einem externen Bediener zu betätigenden externen Schalter oder dgl. oder durch das Anschließen der externen Druckluftquelle an den Befüll-Anschluss der Luftfederungsanlage selbst ausgelöst werden.

Die Ventile der Luftfederungsanlage werden für den Befüllvorgang der Grundbefüllung von dem Steuergerät so geschaltet, dass alle Luftfedern und evt. der Druckspeicher mit einem vorgegebenen Druck befüllt werden. Ist der gewünschte Druck in allen Bauteilen (Luftfedern, Druckspeicher, Verbindungsleitungen, Lufttrockner, etc.) der Luftfederungsanlage vorhanden, dann wird der Befüllvorgang der Grundbefüllung der Luftfederungsanlage durch das Steuergerät der Luftfederungsanlage beendet. Der gewünschte Befülldruck bzw. Solldruck der Luftfederungsanlage ist so bemessen, dass zumindest das tiefste mögliche Fahrzeugniveau oder das Fahrzeug-Normalniveau oder auch alle möglichen Fahrzeugniveaus, insbesondere das höchste Fahrzeugniveau, nach der Grundbefüllung durch die Luftfederungsanlage einstellbar sind.

Gemäß einer Weiterbildung der Erfindung nach Anspruch 2 ist vorgesehen, dass der Druck in der Luftfederungsanlage während der Grundbefüllung mit Hilfe eines Modells überwacht wird. Der Vorteil der Weiterbildung ist darin zu sehen, dass Druck während der Befüllvorganges nicht ständig überwacht werden muss. Aus der Kenntnis des ggf. gemessenen Ausgangsdrucks der externen Druckquelle und der Annahme, dass dieser Druck konstant bleibt, sowie der bekannten Volumina der Bestandteile der Luftfederungsanlage (Luftfedern, Druckspeicher, Verbindungsleitungen, Lufttrockner, etc.) kann beispielsweise die Befüllzeit ermittelt werden, in welcher sich ein vorgegebener Druck in der Luftfederungsanlage einstellt. Oder es kann ein Befüllzyklus mit bestimmten Befüllzeiten und Befüllpausen eingestellt werden, um den vorgegebenen Druck zu erreichen. Mit Hilfe des Befüll-Modells kann die Grundbefüllung unter Umständen schneller und mit weniger Schaltvorgängen der Ventile durchgeführt werden, als wenn der Druck mittels eines Drucksensors der Luftfederungsanlage jeweils einzeln in den entsprechenden Bestandteilen der Luftfederungsanlage gemessen wird.

Gemäß einer Weiterbildung der Erfindung nach Anspruch 3 ist vorgesehen, dass der Druck in der Luftfederungsanlage während der Grundbefüllung mit Hilfe eines Drucksensors iterativ überwacht wird. Der Vorteil der Weiterbildung ist, dass die Grundbefüllung der Luftfederungsanlage auf den vorgegebenen Druck sehr genau erfolgt und damit keine baldige Nachbefüllung der Luftfederungsanlage durch den Betrieb des Kompressors erforderlich ist. Um den Druck in den einzelnen Bestandteilen der Luftfederungsanlage zu messen, werden die Ventile der Luftfederungsanlage von dem Steuergerät entsprechend geschaltet. Dies kann fortlaufend oder in bestimmten Zeitabständen durchgeführt werden. In jedem Fall wird der Druck in mindestens einem Bestandteil der Luftfederungsanlage immer nur für eine bestimmte Zeit und mit bestimmten zeitlichen Unterbrechungen - also iterativ -ermittelt. In der zeitlichen Unterbrechung kann die Ermittlung des Drucks in einem anderen Bestandteil der Luftfederungsanlage erfolgen, usw..

Gemäß einer Weiterbildung der Erfindung nach Anspruch 4 ist vorgesehen, dass mindestens ein Druckspeicher vorhanden ist, welcher bei der Grundbefüllung mit Druckluft der externen Druckluftquelle befüllbar ist. Der Vorteil ist darin zu sehen, dass nicht nur die Luftfedern und Verbindungsleitungen mit dem Druck (vor-)befüllt werden, sondern auch der ggf. vorhandene Druckspeicher. Damit ist die Luftfederungsanlage sofort nach dem Grund- oder Erst-Befüllvorgang funktionsfähig, sodass alle wesentlichen Niveauregel-Funktionen ausgeführt werden können.

Gemäß einer Weiterbildung der Erfindung nach Anspruch 5 ist vorgesehen, dass zuerst der Druckspeicher mit Druckluft bis zu einem vorgebbaren Druck befüllt wird, dann die Luftfedern mit Druckluft bis zu dem gewünschten Luftfederbefülldruck befüllt werden, und anschließend der Druckspeicher bis zu dem Druckspeicherbefülldruck mit Druckluft befiillt wird. Der Vorteil dieser Weiterbildung ist darin zu sehen, dass in der gesamten Luftfederungsanlage ein verbesserter Druckausgleich erfolgt, welcher den Einfluss der Luftströmung durch den Befüllvorgang und des dadurch entstehenden Druckgefälles reduziert, sodass der Druck im Druckspeicher und/oder den anderen Bestandteilen der Luftfederungsanlage, wie z.B. Luftfedern, Verbindungsleitung, Kompressor mit Lufttrockner, Ventilen, etc., nach der Unterbrechung des Befüllvorganges und entsprechendem Druckausgleich sowie ohne Einfluss der Luftströmung durch den Befüllvorgang genauer ermittelt werden kann.

Gemäß einer Weiterbildung der Erfindung nach Anspruch 6 ist vorgesehen, dass der Verdichter zur Unterstützung der Grundbefüllung der Luftfederungsanlage mit Druckluft der externen Druckluftquelle betreibbar ist. Ein Vorteil der Weiterbildung besteht darin, dass der Befüllvorgang schneller durchgeführt werden kann. Ein weiterer Vorteil besteht darin, dass der Befüllvorgang überhaupt bis zu dem gewünschten Solldruck durchgeführt werden kann, wenn der Druck der externen Druckquelle kleiner oder gleich als der Soll-Befülldruck ist. Weiterhin ist es möglich, dass einzelne Bestandteile der Luftfederungsanlage, wie z.B. der Druckspeicher oder einzelne Luftfedern, mit einem höheren als dem Druck der externen Druckquelle befüllbar sind.

Gemäß einer Weiterbildung der Erfindung nach Anspruch 7 ist vorgesehen, dass die Grundbefüllung der Luftfederungsanlage beendet wird, wenn der Druck in den einzelnen Kammern dem jeweiligen Solldruck entspricht. Der Vorteil dieser Weiterbildung ist darin zu sehen, dass die Luftfederungsanlage mit genau dem benötigten Druck oder der benötigten Luftmenge befüllt wird, sodass die Luftfederungsanlage weitestgehend funktionsfähig ist.

Gemäß einer Weiterbildung der Erfindung nach Anspruch 8 ist vorgesehen, dass alle Niveauregelfunktionen der Luftfederungsanlage nach erfolgter Grundbefüllung freigebbar sind. Der Vorteil der Weiterbildung ist darin zu sehen, dass der Druck oder die Luftmenge in der Luftfederungsanlage nach dem Befüllvorgang dem optimalen Druck bzw. der optimalen Luftmenge entspricht, sodass alle Niveauregelfunktionen praktisch durchführbar sind und je nach Erfordernis freigegeben werden können.

Gemäß einer Weiterbildung der Erfindung nach Anspruch 9 ist vorgesehen, dass das Steuergerät nach erfolgter Grundbefüllung der Luftfederungsanlage ein Endsignal ausgibt. Ein Vorteil ist darin zu sehen, dass das Ende der erfolgreichen Grundbefüllung durch das Endsignal dem Bedienpersonal optisch oder akustisch angezeigt werden kann. Weiterhin ist es dadurch möglich, dass das Endsignal Vorgänge in externen Systemen auslöst, z.B., dass eine automatische Entkopplung der Verbindungsstelle der Luftfederungsanlage mit der externen Druckquelle vorgenommen wird.

Gemäß einer Weiterbildung der Erfindung nach Anspruch 10 ist vorgesehen, dass das Endsignal des Steuergerätes der Luftfederungsanlage von weiteren Fahrzeugsystemen derart ausgewertet wird, dass deren Funktionsfähigkeit auf die Funktionsfähigkeit der Luftfederungsanlage abstimmbar ist. Der Vorteil dieser Weiterbildung ist darin zu sehen, dass vorbestimmte Funktionen der weiteren Fahrzeugsysteme erst nach dem Ende der Grundbefüllung der Luftfederungsanlage durchführbar sind. Beispielsweise kann die maximale Fahrgeschwindigkeit des Fahrzeuges vor der Grundbefüllung auf "Schritttempo" begrenzt sein und nach erfolgter Grundbefüllung ein höherer Grenzwert für die Fahrgeschwindigkeit je nach Fahrzeugtyp festgelegt werden. Oder aber die Werte für den Bremseneingriff eines ABS- oder ESP- Systems werden nach erfolgter Grundbefüllung geändert.

Gemäß einer Weiterbildung der Erfindung nach Anspruch 11 ist vorgesehen, dass die Luftfederungsanlage mit einer offenen, halb-offenen oder geschlossenen Pneumatikschaltung ausgebildet ist. Der Vorteil der Weiterbildung ist darin zu sehen, dass jede Luftfederungsanlage mit einfachen Mitteln so auszustatten ist, dass das Steuergerät dieser eine entsprechende Grundbefüllung steuert und/oder regelt.

Gemäß einer Weiterbildung der Erfindung nach Anspruch 12 ist vorgesehen, dass zwischen der Verbindungsleitung der Luftfederungsanlage und der externen Druckquelle ein Lufttrockner angeordnet ist. Der Vorteil dieser Weiterbildung ist darin zu sehen, dass die Druck-Luft, welche von der externen Druckquelle in die Luftfederungsanlage gefüllt wird, zusätzlich getrocknet wird und somit die Luftfeuchtigkeit in der Luftfederungsanlage von Beginn an möglichst gering bleibt. Damit lässt sich nach einer Temperaturabsenkung der Umgebungsluft die Gefahr einer anschließenden Vereisung von Ventilen, Verbindungsleitungen oder dgl. im Betrieb des Fahrzeuges und der Luftfederungsanlage wesentlich verringern.

Gemäß einer Weiterbildung der Erfindung nach Anspruch 13 ist vorgesehen, dass der Lufttrockner so bemessen ist, dass am Ende der Grundbefüllung ein Drucktaupunkt der Druckluft in der Luftfederungsanlage von mindestens 20 Kelvin gegenüber der Umgebungstemperatur erreichbar ist. Durch diese Weiterbildung ist sichergestellt, dass bei oder nach in Betriebnahme des Fahrzeuges in den meisten Ländern mit "normaler" Luftfeuchtigkeit und mittleren durchschnittlichen Temperaturen keine Vereisung der Luftfederungsanlage auftreten kann.

Gemäß einer Weiterbildung der Erfindung nach Anspruch 14 ist vorgesehen, dass der Drucktaupunkt der Druckluft in der Luftfederungsanlage am Ende der Grundbefüllung mindestens 40 Kelvin gegenüber der Umgebungstemperatur beträgt. Durch diese Weiterbildung ist sichergestellt, dass bei oder nach in Betriebnahme des Fahrzeuges in praktisch allen Ländern keine Vereisung der Luftfederungsanlage auftreten kann, da die entsprechende Absenkung des Taupunktes der Druckluft mit mehr als 40 Kelvin ausreichend groß ist.

Gemäß einer Weiterbildung der Erfindung nach Anspruch 15 ist vorgesehen, dass die Luftfeuchtigkeit der Druckluft, welche durch den Lufttrockner zwischen der Verbindungsleitung der Luftfederungsanlage und der externen Druckquelle hindurch in die Luftfederungsanlage überführt wird, von dem Steuergerät der Luftfederungsanlage überwacht wird. Der Vorteil dieser Weiterbildung ist darin zu sehen, dass die Luftfeuchtigkeit in der Luftfederungsanlage während und/oder nach der Grundbefüllung bekannt ist. Dadurch können die Regenerationsintervalle der Luftfederungsanlage auf die Luftfeuchtigkeit der Luftfederungsanlage nach der Grundbefüllung abgestimmt und entsprechend verkürzt oder verlängert werden.

Gemäß einer Weiterbildung der Erfindung nach Anspruch 16 ist vorgesehen, dass der Befüllvorgang der Luftfederungsanlage unterbrochen wird, wenn die Luftfeuchtigkeit der Druckluft in der Luftfederungsanlage einen Grenzwert überschreitet. Der Vorteil ist darin zu sehen, dass die Luftfeuchtigkeit der Luft in der Luftfederungsanlage überwacht wird und der Befüllvorgang unter bestimmten Bedingungen, welche eine Beeinträchtigung für die Luftfederungsanlage darstellen können, unterbrochen oder abgebrochen wird. Damit entspricht die Luftfeuchtigkeit in der Luftfederungsanlage nach einer Grundbefüllung immer mindestens einem vorbestimmten und für den einwandfreien Betrieb der Luftfederungsanlage benötigten Grenzwert für die Luftfeuchtigkeit.

Gemäß einer Weiterbildung der Erfindung nach Anspruch 17 ist vorgesehen, dass von dem Steuergerät der Luftfederungsanlage ein Regenerationsbetrieb des Lufttrockners zwischen der Verbindungsleitung der Luftfederungsanlage und der externen Druckquelle eingeleitet wird. Der Vorteil der Weiterbildung ist darin zu sehen, dass der Lufttrockner regeneriert werden kann, ohne ausgetauscht werden zu müssen, sodass kein zusätzlicher Installationsaufwand für den Umbau der externen Druckquelle und/oder des Luftrockners notwendig ist.

Gemäß einer Weiterbildung der Erfindung nach Anspruch 18 ist vorgesehen, dass von dem Steuergerät der Luftfederungsanlage der unterbrochene Befüllvorgang der Luftfederungsanlage fortgesetzt wird, wenn die Regeneration des Lufttrockners zwischen der Verbindungsleitung der Luftfederungsanlage und der externen Druckquelle abgeschlossen ist. Der Vorteil der Weiterbildung ist darin zu sehen, dass der Lufttrockner regeneriert werden kann und der Grundbefüllvorgang fortgesetzt und ggf. beendet werden kann, ohne zusätzlichen Installationsaufwand für den Umbau der externen Druckquelle und/oder des Luftrockners zu verursachen. Weiterhin wird der vorbestimmte Grenzwert für die Luftfeuchtigkeit in der Luftfederungsanlage während oder nach dem Grundbefüllvorgang nicht überschritten.

Gemäß einer Weiterbildung der Erfindung nach Anspruch 19 ist vorgesehen, dass eine Luftfederungsanlage nach einem der vorherigen Ansprüche verwendet wird. Der Vorteil dieser Weiterbildung ist darin zu sehen, dass fast alle erforderlichen Verfahrensschritte von dem Steuergerät initiiert und überwacht werden, sodass die Steuerung und/oder Regelung der Grundbefüllung quasi autark von dem Steuergerät der Luftfederungsanlage durchführbar ist. Lediglich der Anschluss der externen Druckquelle und/oder des externen Lufttrockners an die externe Verbindungsleitung der Luftfederungsanlage und ggf. die Auslösung des Startsignals für den Grundbefüllvorgang bedürfen "externer" Verfahrensabläufe.

Ein Ausführungsbeispiel und weitere Vorteile der Erfindung werden im Zusammenhang mit den nachstehenden Figuren erläutert, darin zeigt:
- Fig. 1: eine offene Niveauregelanlage,
- Fig. 2: eine geschlossene Niveauregelanlage,

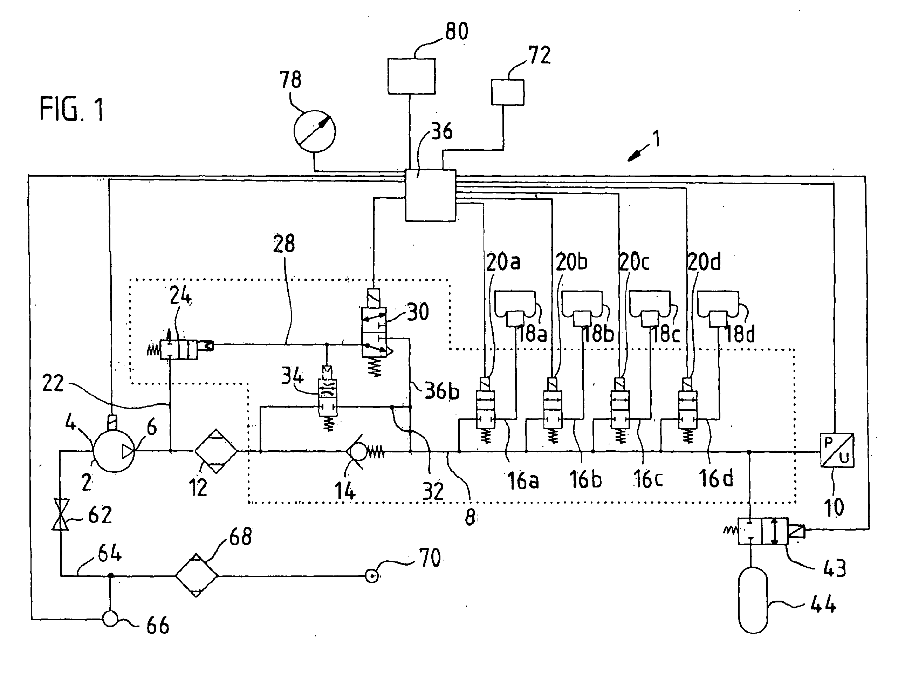

Fig. 1 zeigt eine offene Niveauregelanlage mit einem Kompressor 2, der einen Eingang 4 und einen Ausgang 6 aufweist. Am Ausgang 6 beginnt die Sensordruckluftleitung 8, die an einem Druckluftsensor 10 endet. In der Sensordruckluftleitung 8 liegt ein Lufttrockner 12 und ein Rückschlagventil 14, dass zum Drucksensor 10 hin öffnet. Die Sensordruckluftleitung 8 ist als Stammleitung ausgebildet, von der Druckluftleitungen 16a bis 16d abzweigen, die in Luftfedern 18a bis 18d enden. In den Druckluftleitungen 16a bis 16d liegen schaltbare Wegeventile 20a bis 20d, die in ihrem ersten Schaltzustand die jeweilige Druckluftleitung 16a bis 16d sperren und in ihrem zweiten Schaltzustand die jeweilige Druckluftleitung 16a bis 16d durchschalten.

Zwischen dem Ausgang 6 des Kompressors 2 und dem Lufttrockner 12 zweigt von der Sensordruckluftleitung 8 eine Ablassleitung 22 ab, die in einem schaltbaren Wegeventil 24 endet. Das schaltbare Wegeventil 24 sperrt in einem ersten Schaltzustand die Ablassleitung und verbindet diese in einem zweiten Schaltzustand mit der Atmosphäre. Das schaltbare Wegeventil 24 ist als pneumatisches Wegeventil ausgebildet und der pneumatische Steuereingang 26 wird über die Druckluftleitung 28 angesteuert, in der ein schaltbares Wegeventil 30 liegt. Das Rückschlagventil 14 wird von einer Druckluftleitung 32 überbrückt, in der ebenfalls ein pneumatisch schaltbares Wegeventil 34 liegt. Die elektrisch schaltbaren Wegeventile 20a bis 20d und 30 werden von der Steuereinheit 36 der Niveauregelanlage gesteuert. Ferner wird von der Steuereinheit 36 der Kompressor 2 gesteuert.

Von der Sensordruckluftleitung 8 zweigt eine Druckluftleitung zu einem Druckspeicher 44 ab. Diese wird von einem magnetischen Wegeventil 43 in einem ersten Zustand gesperrt und in einem zweiten Zustand durchgeschaltet, sodass Druckluft von der Druckluftleitung 8 in den Druckspeicher 44 überführt werden kann oder umgekehrt. Die Druckluft in der Druckluftleitung 8 kann zu den Luftfedern 18a bis 18d oder in die Atmosphäre geleitet werden oder wird von dem Kompressorausgang 6 oder den Luftfedern 18a bis 18d in die Druckluftleitung 8 überführt. Mit Hilfe der in der Fig. 1 gezeigten Niveauregelanlage kann jede einzelne Luftfeder 18a bis 18d zum Anheben des Niveaus mit Druckluft befüllt bzw. zum Absenken des Niveaus in die Atmosphäre entleert werden. Wie dies im einzelnen erfolgt wird ausführlich in der EP 0 978 397 B1 beschrieben, so dass hier nicht näher darauf eingegangen werden soll.

Von dem Eingang 4 des Kompressors 2 zweigt eine Ansaug-Druckluftleitung 64 ab, welche einen externen Anschluss 62 aufweist, um einen nicht dargestellt Luftfilter oder Schalldämpfer oder eine externe Druckluftquelle 76 anschließen zu können. Die Druckluftleitung 64 ist entsprechend dem angewendeten Druckniveau beispielsweise dem höchsten Druckniveau der externen Druckquelle 76 auszulegen, sodass keine Undichtigkeiten entstehen. Zwischen dem externen Anschluss 62 und der externen Druckquelle 76 ist ein weiterer Lufttrockner 68 angeordnet, welcher die Druckluft, die von der externen Druckquelle 76 in die Luftfederungsanlage 1 überführt, trocknet.

Der Lufttrockner 68 ist im Idealfall so ausgelegt, dass die Luftfeuchtigkeit der in die Luftfederungsanlage 1 überführten Druckluft so stark getrocknet worden ist, dass in keinem Anwendungsfall der Luftfederungsanlage 1 eine Funktionsbeeinträchtigung durch ausgefallenes Wasser - insbesondere einer Vereisung - der Ventile und/oder Druckluftleitungen entstehen kann. Je nach Anwendungsgebiet und üblichen Umgebungstemperaturen reicht eine Drucktaupunktabsenkung von 40 Kelvin gegenüber der aktuellen Umgebungstemperatur während des Befüllvorgangs aus. In einigen Gegenden mit relativ konstanten Umgebungstemperaturen ist im Regelfall eine Drucktaupunktabsenkung der Druckluft in der Luftfederungsanlage 1 von 20 Kelvin gegenüber der aktuellen Umgebungstemperatur während des Befüllvorgangs bzw. nach dem Befüllvorgang ausreichend. Selbstverständlich sind auch Zwischenwerte oder jede andere beliebige Drucktaupunktabsenkung denkbar und einstellbar.

Vorzugsweise ist der Lufttrockner 68 so ausgelegt, dass die Trocknungs-Kapazität des Lufttrockners 68 einen vollständigen Befüllvorgang der Luftfederungsanlage 1 durch die externe Druckquelle 76 unter Einhaltung der geforderten Drucktaupunktabsenkung ohne Unterbrechung oder dgl. zulässt. Dazu ist die Größe (Länge und Durchmesser) des Lufttrockners 68 in Verbindung mit dem verwendeten Trocknungsmedium (Molekularsieb, Aluminiumoxid, Silikaoxid, Membrane, etc.) auf das Befüllvolumen und den Befülldruck der Luftfederungsanlage 1 in Abhängigkeit des Druckes und des Drucktaupunktes der externen Druckquelle 76 abgestimmt. Da aber der Drucktaupunkt der Druckluft der externen Druckquelle 76 nicht immer bekannt ist und das Druckniveau der externen Druckquelle 76 sehr unterschiedlich sein kann, ist es sinnvoll, die Luftqualität, d.h. zumindest den Drucktaupunkt der von dem externen Lufttrockner 68 in die Luftfederungsanlage 1 überführen Druckluft, zu überwachen und ggf. den Lufttrockner 68 bei überschreiten eines Grenzwertes der Luftqualität zu regenerieren und/oder auszutauschen.

In dem gezeigten Beispiel der Fig. 1 ist zwischen dem weiteren, externen Lufttrockner 68 und dem externen Druckluftanschluss 62 ein Sensor 66 angeordnet, welcher den Drucktaupunkt der Druckluft, welche von der externen Druckquelle 76 in die Luftfederungsanlage 1 überführt wird, überwacht. Der Sensor 66 kann im Idealfall die Luftfeuchtigkeit, die Lufttemperatur und den Druck der Druckluft in der Druckluftleitung 64 überwachen. Es ist auch möglich, den Sensor 66 direkt im Lufttrockner 68 anzuordnen. Der Sensor 66 ist über eine Signalleitung mit dem Steuergerät 36 der Luftfederungsanlage 1 verbunden, sodass die Signale von dem Sensor 66 von dem Steuergerät 36 ausgewertet und überwacht werden können. Wird also ein Grenzwert der Luftqualität der Druckluft in der Druckluftleitung 64 überschritten, dann erhält das Steuergerät 36 ein entsprechendes Signal und kann den Befüllvorgang der Luftfederungsanlage 1 durch die externe Druckquelle 76 unterbrechen oder abbrechen, um den externen Lufttrockner 68 zu regenerieren oder den externen Lufttrockner 68 auszutauschen.

Um den externen Lufttrockner 68 zu regenerieren wird ein schaltbares Wegeventil 72, welches in einer Druckluftleitung, die zwischen dem Lufttrockner 68 und der externen Druckquelle 76 von der Druckluftleitung 64 abzweigt, angeordnet ist, von dem Steuergerät 36 so angesteuert, dass es von einem ersten geschlossenen Schaltzustand in einen zweiten geöffneten Schaltzustand überführt wird. In dem zweiten Schaltzustand des Wegeventils 72 ist die Druckluftleitung 64 über die Leitung 70 mit einer Leitung 74 zur Atmosphäre verbunden, sodass zumindest ein Teil der Druckluft von der Luftfederungsanlage 1 über den externen Anschluss 62 durch die Druckluftleitung 64 und den externen Lufttrockner 68 in die Atmosphäre überführt werden kann, um den Lufttrockner 68 zu regenerieren. Um die Effektivität der Regeneration des externen Lufttrockners 68 zu erhöhen, ist in dem Lufttrockner 68 eine an sich bekannte und nicht dargestellte Anordnung aus einer Drossel und einem Rückschlagventil vorhanden, sodass die Druckluft der Luftfederungsanlage 1 vor dem Eintritt in des Trocknerbett des Lufttrockners 68 und zur Atmosphärenleitung 74 weitestgehend entspannt werden kann. Damit während der Regeneration des Luftttrockners 68 keine Druckluft aus der externen Druckquelle 76 in die Atmosphäre entweicht, kann zwischen der externen Druckquelle 76 und der Verbindungsstelle der Druckluftleitungen 64 und 70 ein weiteres nicht dargestelltes schaltbares Wegeventil angeordnet sein, welches ebenfalls mit dem Steuergerät 36 der Luftfederungsanlage 1 verbunden ist und von diesem entsprechend angesteuert, d.h. geöffnet und geschlossen, wird.

Zur Befüllung der einzelnen Komponenten 18a bis 18d, 44 der Luftfederungsanlage 1 mit Druckluft aus der externen Druckquelle 76 werden die Ventile 20a bis 20d und/oder 43 von dem Steuergerät 36 entsprechend angesteuert. Die Druckluft der externen Druckquelle 76 wird über die Druckluftleitung 64, den externen Lufttrockner 68, den externen Anschluss 62 bis zum Eingang 4 des Kompressors 2 geleitet und von dort mit oder ohne Unterstützung des Kompressors 2 bzw. Kompressorlauf, wie oben beschrieben, in die einzelnen Komponenten 18a bis 18d, 44 überführt. Der Druck in den einzelnen Komponenten 18a bis 18d, 44 kann mit dem Drucksensor 10, wie oben beschrieben, ermittelt werden. Ggf. kann in dem externen Anschluss 62 ein weiteres schaltbares und mit dem Steuergerät 36 verbundenes Wegeventil angeordnet sein, um die Druckluftleitung 64 zum Kompressoreingang 4 zu öffnen oder zu schließen und so den Befüllvorgang zu starten oder zu beenden/unterbrechen.

Ist der erforderliche Befülldruck bzw. ein Grenzwert für den Druck in einer Komponente 18a bis 18d, 44 erreicht, dann wird das entsprechende Ventil 20a bis 20d und /oder 43 geschlossen. Ist der erforderliche Befülldruck in allen Komponenten 18a bis 18d, 44 erreicht, dann wird der Befüllvorgang der Grundbefüllung beendet und das Steuergerät 36 sendet ein End-Signal an eine akustische oder optische Anzeigeeinheit 78, sodass die Druckluftleitung 64 von dem externen Anschluss 62 getrennt werden kann. Das Trennen der Druckluftleitung 64 von dem externen Anschluss 62 kann entweder von Bedienpersonal oder automatisch durch einen Roboter oder dgl. erfolgen. Das End-Signal der Grundbefüllung, welches die Beendigung der erfolgreichen Grundbefüllung der Luftfederungsanlage 1 signalisiert, wird über eine Verbindungsleitung mindestens einem weiteren Fahrzeugsystem 80 zur Verfügung gestellt.

Sowohl in dem weiteren Fahrzeugsystem 80 als auch in der Luftfederungsanlage 1 selbst sind nach der Beendigung der erfolgreichen Grundbefüllung der Luftfederungsanlage 1 bestimmte Systemfunktionen ausführbar, welche vorher nicht ausführbar waren. Dies kann bei der Luftfederungsanlage 1 beispielsweise die Regelung in ein Hochniveau oder das Höchstniveau oder eine Reserveradbefüllung betreffen. Bei einem weiteren Fahrzeugsystem 80 kann die Funktionsfähigkeit des ABS-, ASR-, ESP- Systems oder der Lenkung auf die Funktionsfähigkeit der Luftfederungsanlage 1 abgestimmt und somit nach erfolgter Grundbefüllung erweitert werden. Dies ist in der Hinsicht sinnvoll, da die entsprechenden Regelungswerte beispielsweise von dem Fahrzeugniveau beeinflusst werden.

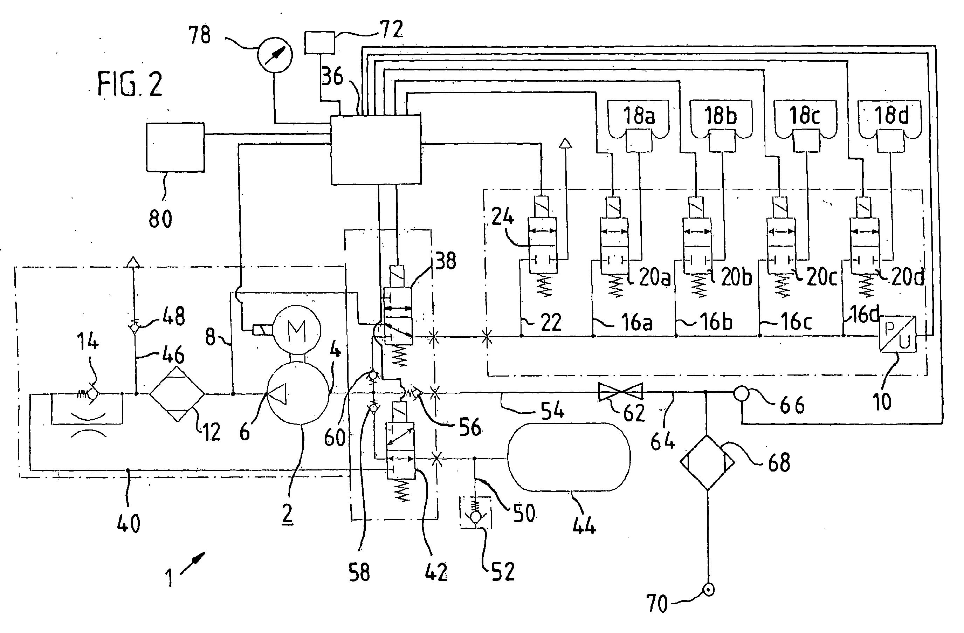

Fig. 2 zeigt eine geschlossene Niveauregelanlage, deren Aufbau an sich aus dem Stand der Technik bekannt ist und ausführlich in der EP 1 243 447 A2 beschrieben wird. Daher soll an dieser Stelle auf den Aufbau der Niveauregelanlage nur insoweit eingegangen werden, als dies für die folgenden Erläuterungen notwendig ist. Die Niveauregelanlage enthält einen Kompressor 2 mit einem Eingang 4 und einem Ausgang 6. An den Ausgang 6 des Kompressors 2 sind mehrere Druckluftleitungen angeschlossen. So geht von dem Ausgang 6 die Sensordruckluftleitung 8 aus, die in dem Drucksensor 10 endet. Die Sensordruckluftleitung 8 ist genau wie bei der in der Fig.1 gezeigten Niveauregelanlage ebenfalls als Stammleitung ausgebildet, von der Druckluftleitungen 16a bis 16d zu Luftfedern 18a bis 18d abzweigen, in denen schaltbare Wegeventile 20a bis 20d liegen.

Ferner zweigt von der Sensordruckluftleitung 8 die Ablassleitung 22 ab, in der ein schaltbares Wegeventil 24 liegt. Neben der Sensordruckluftleitung 8, den Druckluftleitungen 16a bis 16d und der Ablassleitung 22 zweigt von dem Ausgang 6 des Kompressors 2 die Druckluftleitung 40 ab, die über ein schaltbares Wegeventil 42 mit dem Druckluftspeicher 44 der geschlossenen Niveauregelanlage verbindbar ist. Von der Druckluftleitung 40 zweigt eine weitere Druckluftleitung 46 ab, in der ein Überdruckventil 48 in Form eines Rückschlagventils liegt. Über die Druckluftleitung 46 kann der Kompressor 2 bei einem extremen Überdruck in der Niveauregelanlage direkt in die Atmosphäre fördern, so dass er nicht beschädigt wird.
Von der Druckluftleitung 40 zweigt zwischen dem schaltbaren Wegeventil 42 und dem Druckluftspeicher 44 zusätzlich eine Druckluftleitung 50 ab, in der ein Rückschlagventil 52 liegt, das zur Druckluftleitung 40 hin öffnet. An die Druckluftleitung 50 ist eine externe Druckluftquelle anschließbar, über die eine Erstbefüllung des Druckluftspeichers 44 erfolgen kann, um den Kompressor 2 zu schonen. Ferner ist der Eingang 4 des Kompressors 2 über eine Druckluftleitung 54 direkt mit der Atmosphäre verbunden. In der Druckluftleitung 54 liegt ein Rückschlagventil 56, das in Richtung des Eingangs 4 des Kompressors öffnet. Über die Druckluftleitung 54 kann mit Hilfe des Kompressors 2 eine Befüllung der Luftfedern 18a bis 18d erfolgen, wenn in dem Druckluftspeicher 44 keine oder zu wenig Druckluft vorhanden ist. In diesem Fall öffnet sich das Rückschlagventil 56 und das Rückschlagventil 58 wird automatisch gesperrt, so dass der Kompressor 2 Druckluft direkt aus der Atmosphäre ansaugt.

Mit Hilfe der in der Fig. 2 gezeigten Luftfederungsanlage erfolgt ein Grund-Befüllvorgang analog der Beschreibung der Luftfederungsanlage in Fig.1. Die Atmosphärenleitung 54 ist über einen externen Anschluss 62 mit einer Druckluftleitung 64 verbunden, welche zu einer externen Druckquelle 76 führt. Zwischen der externen Druckquelle 76 und dem externen Anschluss 62 ist ein externen Lufttrockner 68 angeordnet. Um den Lufttrockner, wie oben beschrieben, zu regenerieren, zweigt zwischen dem externen Lufttrockner 68 und der externen Druckquelle 76 eine Druckluftleitung 70 ab, welche durch ein schaltbares Wegeventil 72 mit der Atmosphärenleitung 74 verbindbar oder von dieser trennbar ist. Der Ablauf des Befüllvorgang der Luftfederungsanlage 1 durch die externe Druckquelle 76 oder die Regeneration des externen Lufttrockner 68 läuft mit den entsprechenden schaltungstechnischen Besonderheiten des Ausführungsbeispiels nach Fig.2, aber ansonsten wie unter Fig. 1 beschrieben, ab. Ebenso erfolgt die akustische oder optische Anzeige des End-Signals des Grund-Befüllvorganges in der Anzeigeeinheit 78 und die Übermittlung des End-Signals des Grund-Befüllvorgangs wird von dem Steuergerät 36 an mindestens ein weiteres Fahrzeugsystem 80 wie in der Beschreibung der Fig. 1 ausgeführt.

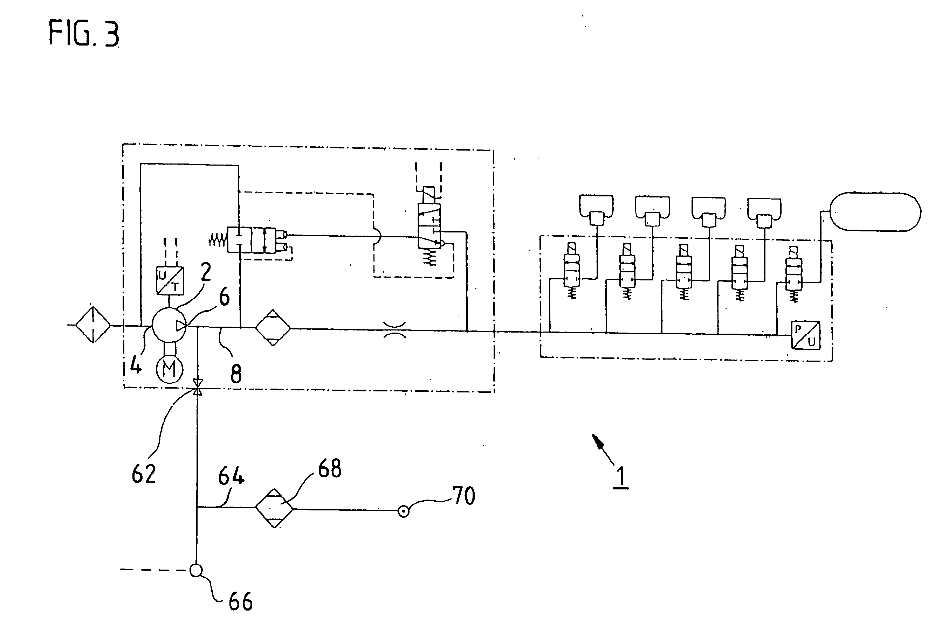

In der Fig.3 ist beispielhaft dargestellt, dass der externe Anschluss 62 nicht zwingend an den Kompressoreingang 4 (wie unter Fig. 1 und Fig. 2 dargestellt) erfolgen muss, sondern auch direkt mit der Druckluftleitung 8 verbunden sein kann. In diesem Ausführungsbeispiel nach Fig. 3 wird die Druckluft der hier nicht dargestellten externen Druckluftquelle während des Grund-Befüllvorgangs der Luftfederungsanlage nicht durch den Kompressor 2 geleitet, was den Strömungswiderstand der Druckluft ggf. reduziert. Allerdings kann der Kompressor 2 in diesem Fall auch nicht zur Unterstützung des Befüllvorgang betrieben werden. Ansonsten sind aber alle Funktionen, welche für den Grund-Befüllvorgang der Luftfederungsanlage notwendig sind, durchführbar, wie diese in der Figurenbeschreibung der Fig. 1 und Fig. 2 genannt sind.

Die erfindungsgemäße Grundbefüllung einer Luftfederungsanlage ist nicht auf die genannten Ausführungsbeispiele beschränkt, sondern kann mit allen anderen bekannten und mit den entsprechenden Komponenten ausgerüsteten Luftfederungsanlagen durchgeführt werden, wobei dann ggf. kleine Anpassungen notwendig sind.

### Bezugszeichenliste

### (Teil der Beschreibung)

- 1: Luftfederungsanlage
- 2: Kompressor, Verdichter
- 4: Eingang
- 6: Ausgang
- 8: Sensordruckluftleitung
- 10: Drucksensor
- 12: Lufttrockner
- 14: Rückschlagventil
- 16a-16d: Druckluftleitung
- 18a-18d: Luftfedern
- 20a-20d: schaltbares Wegeventil
- 22: Ablassleitung
- 24: schaltbares Wegeventil
- 26: pneumatischer Steuereingang
- 28: Druckluftleitung
- 30: schaltbares Wegeventil
- 32: Druckluftleitung
- 34: schaltbares Wegeventil
- 36: Steuereinheit
- 38: schaltbares Wegeventil
- 40: Druckluftleitung
- 42: schaltbares Wegeventil
- 43: schaltbares Wegeventil
- 44: Druckspeicher
- 46: Druckluftleitung
- 48: Rückschlagventil
- 50: Druckluftleitung
- 52: Rückschlagventil
- 54: Atmosphärenleitung
- 56, 58, 60: Rückschlagventil
- 62: Verbindungsleitung
- 64: Druckluftleitung
- 66: Sensor
- 68: (externer) Lufttrockner
- 70: (externe) Druckluftquelle
- 72: schaltbares Wegeventil
- 78: Anzeigeeinheit
- 80: Fahrzeugsystem

## Patentansprüche

1. Luftfederungsanlage (1) für ein Kraftfahrzeug, mit mindestens einer Luftfeder (18a, 18b, 18c, 18d) pro Kraftfahrzeugrad an mindestens einer Fahrzeugachse, mindestens einem Steuergerät (36), mindestens einem Verdichter (2), mindestens einem Drucksensor (10), mindestens einem Schaltventil (20a, 20b, 20c, 20d) und mindestens einer Verbindungsleitung (8, 16a, 16b, 16c, 16d, 62, 64), **dadurch gekennzeichnet, dass**
die Verbindungsleitung (8, 64) mit einer externen Druckluftquelle (76) verbunden wird,
das Steuergerät (36) der Luftfederungsanlage (1) ein Startsignal zur Grundbefüllung erhält,
mindestens ein Ventil (20a, 20b, 20c, 20d) vom Steuergerät (36) so angesteuert wird, dass eine Grundbefüllung mindestens einer Komponente (8, 16a, 16b, 16c, 16d, 18a, 18b, 18c, 18d, 62, 64) der Luftfederungsanlage (1) mit der Druckluft der externen Druckluftquelle (76) erfolgt.

2. Luftfederungsanlage (1) für ein Kraftfahrzeug nach Anspruch 1, **dadurch**
**gekennzeichnet, dass**
der Druck in der Luftfederungsanlage (1) während der Grundbefüllung mit Hilfe eines Modells überwacht wird.

3. Luftfederungsanlage (1) für ein Kraftfahrzeug nach Anspruch 1, **dadurch**
**gekennzeichnet, dass**
der Druck in der Luftfederungsanlage (1) während der Grundbefüllung mit Hilfe eines Drucksensors (10) iterativ überwacht wird.

4. Luftfederungsanlage (1) für ein Kraftfahrzeug nach Anspruch 1, 2 oder 3, **dadurch**
**gekennzeichnet, dass**
mindestens ein Druckspeicher (44) vorhanden ist, welcher bei der Grundbefüllung mit Druckluft der externen Druckluftquelle (76) befüllbar ist.

5. Luftfederungsanlage (1) für ein Kraftfahrzeug nach Anspruch 4, **dadurch**
**gekennzeichnet, dass**
zuerst der Druckspeicher (44) mit Druckluft bis zu einem vorgebbaren Druck befüllt wird,
dann die Luftfedern (18a, 18b, 18c, 18d) mit Druckluft bis zu dem gewünschten Luftfederbefülldruck befüllt werden, und
anschließend der Druckspeicher (44) bis zu dem Druckspeicherbefülldruck mit Druckluft befüllt wird.

6. Luftfederungsanlage (1) für ein Kraftfahrzeug nach Anspruch 1 oder Anspruch 4,
**dadurch gekennzeichnet, dass**
der Verdichter (2) zur Unterstützung der Grundbefüllung der Luftfederungsanlage (1) mit Druckluft der externen Druckluftquelle (76) betreibbar ist.

7. Luftfederungsanlage (1) für ein Kraftfahrzeug nach Anspruch 1, 3, 4 oder 5, **dadurch**
**gekennzeichnet, dass**
die Grundbefüllung der Luftfederungsanlage (1) beendet wird, wenn der Druck in den einzelnen Kammern (8, 12, 18a, 18b, 18c, 18d, 44) dem jeweiligen Solldruck entspricht.

8. Luftfederungsanlage (1) für ein Kraftfahrzeug nach einem der vorhergehenden Ansprüche, **dadurch gekennzeichnet, dass**
alle Niveauregelfunktionen der Luftfederungsanlage (1) nach erfolgter Grundbefüllung freigebbar sind.

9. Luftfederungsanlage (1) für ein Kraftfahrzeug nach einem der vorhergehenden Ansprüche, **dadurch gekennzeichnet, dass**
das Steuergerät (36) nach erfolgter Grundbefüllung der Luftfederungsanlage (1) ein Endsignal ausgibt.

10. Luftfederungsanlage (1) für ein Kraftfahrzeug nach Anspruch 9, **dadurch**
**gekennzeichnet, dass**
das Endsignal des Steuergerätes (36) der Luftfederungsanlage (1) von weiteren Fahrzeugsystemen (80) derart ausgewertet wird, dass deren Funktionsfähigkeit auf die Funktionsfähigkeit der Luftfederungsanlage (1) abstimmbar ist.

11. Luftfederungsanlage (1) für ein Kraftfahrzeug nach einem der vorhergehenden Ansprüche, **dadurch gekennzeichnet, dass**
die Luftfederungsanlage (1) mit einer offenen, halb-offenen oder geschlossenen Pneumatikschaltung ausgebildet ist.

12. Luftfederungsanlage (1) für ein Kraftfahrzeug nach einem der vorhergehenden Ansprüche, **dadurch gekennzeichnet, dass**
zwischen der Verbindungsleitung (8, 62, 64) der Luftfederungsanlage (1) und der externen Druckquelle (76) ein Lufttrockner (68) angeordnet ist.

13. Luftfederungsanlage (1) für ein Kraftfahrzeug nach Anspruch 12, **dadurch**
**gekennzeichnet, dass**
der Lufttrockner (68) so bemessen ist, dass am Ende der Grundbefüllung ein Drucktaupunkt der Druckluft in der Luftfederungsanlage (1) von mindestens 20 Kelvin gegenüber der Umgebungstemperatur erreichbar ist.

14. Luftfederungsanlage (1) für ein Kraftfahrzeug nach Anspruch 13, **dadurch**
**gekennzeichnet, dass**
der Drucktaupunkt der Druckluft in der Luftfederungsanlage (1) am Ende der Grundbefüllung mindestens 40 Kelvin gegenüber der Umgebungstemperatur beträgt.

15. Luftfederungsanlage (1) für ein Kraftfahrzeug nach Anspruch 12, 13 oder 14, **dadurch**
**gekennzeichnet, dass**
die Luftfeuchtigkeit der Druckluft, welche durch den Lufttrockner (68) zwischen der Verbindungsleitung (8, 62, 64) der Luftfederungsanlage und der externen Druckquelle (76) hindurch in die Luftfederungsanlage (1) überführt wird, von dem Steuergerät (36) der Luftfederungsanlage (1) überwacht wird.

16. Luftfederungsanlage (1) für ein Kraftfahrzeug nach Anspruch 15, **dadurch**
**gekennzeichnet, dass**
der Befüllvorgang der Luftfederungsanlage (1) unterbrochen wird, wenn die Luftfeuchtigkeit der Druckluft in der Luftfederungsanlage (1) einen Grenzwert überschreitet.

17. Luftfederungsanlage (1) für ein Kraftfahrzeug nach Anspruch 16, **dadurch**
**gekennzeichnet, dass**
von dem Steuergerät (36) der Luftfederungsanlage (1) ein Regenerationsbetrieb des Lufttrockners (68) zwischen der Verbindungsleitung (8, 62, 64) der Luftfederungsanlage (8) und der externen Druckquelle (76) eingeleitet wird.

18. Luftfederungsanlage (1) für ein Kraftfahrzeug nach Anspruch 17, **dadurch**
**gekennzeichnet, dass**
von dem Steuergerät (36) der Luftfederungsanlage (1) der unterbrochene Befüllvorgang der Luftfederungsanlage (1) fortgesetzt wird, wenn die Regeneration des Lufttrockners (68) zwischen der Verbindungsleitung (8, 62, 64) der Luftfederungsanlage (1) und der externen Druckquelle (76) abgeschlossen ist.

19. Verfahren zur Steuerung und/oder Regelung des Befüllvorganges einer Luftfederungsanlage (1) eines Kraftfahrzeuges**, dadurch gekennzeichnet, dass**
eine Luftfederungsanlage (1) nach einem der vorherigen Ansprüche verwendet wird.

## Claims

1. Pneumatic shock absorbing system (1) for a motor vehicle, having at least one air spring (18a, 18b, 18c, 18d) per motor vehicle wheel on at least one vehicle axle, at least one control unit (36), at least one compressor (2), at least one pressure sensor (10), at least one on-off valve (20a, 20b, 20c, 20d) and at least one connecting line (8, 16a, 16b, 16c, 16d, 62, 64), **characterized in that**
the connecting line (8, 64) is connected to an external compressed air source (76),
the control unit (36) of the pneumatic shock absorbing system (1) receives a start signal for the basic filling operation,
at least one valve (20a, 20b, 20c, 20d) is actuated by the control unit (36) in such a way that a basic filling operation of at least one component (8, 16a, 16b, 16c, 16d, 18a, 18b, 18c, 18d, 62, 64) of the pneumatic shock absorbing system (1) takes place with the compressed air of the external compressed air source (76).

2. Pneumatic shock absorbing system (1) for a motor vehicle according to Claim 1, **characterized in that** the pressure in the pneumatic shock absorbing system (1) during the basic filling operation is monitored using a model.

3. Pneumatic shock absorbing system (1) for a motor vehicle according to Claim 1, **characterized in that** the pressure in the pneumatic shock absorbing system (1) is monitored iteratively using a pressure sensor (10) during the basic filling operation.

4. Pneumatic shock absorbing system (1) for a motor vehicle according to Claim 1, 2 or 3, **characterized in that** at least one pressure accumulator (44) is provided which, during the basic filling operation, can be filled with compressed air from the external compressed air source (76).

5. Pneumatic shock absorbing system (1) for a motor vehicle according to Claim 4, **characterized in that** first of all the pressure accumulator (44) is filled with compressed air up to a predefinable pressure, then the air springs (18a, 18b, 18c, 18d) are filled with compressed air up to the desired air spring filling pressure, and subsequently the pressure accumulator (44) is filled with compressed air up to the pressure accumulator filling pressure.

6. Pneumatic shock absorbing system (1) for a motor vehicle according to Claim 1 or Claim 4, **characterized in that** the compressor (2) can be operated with compressed air from the external compressed air source (76) in order to assist the basic filling operation of the pneumatic shock absorbing system (1).

7. Pneumatic shock absorbing system (1) for a motor vehicle according to Claim 1, 3, 4 or 5, **characterized in that** the basic filling operation of the pneumatic shock absorbing system (1) is ended if the pressure in the individual chambers (8, 12, 18a, 18b, 18c, 18d, 44) corresponds to the respective setpoint pressure.

8. Pneumatic shock absorbing system (1) for a motor vehicle according to one of the preceding claims, **characterized in that** all the ride level control functions of the pneumatic shock absorbing system (1) can be enabled after the basic filling operation has taken place.

9. Pneumatic shock absorbing system (1) for a motor vehicle according to one of the preceding claims, **characterized in that** the control unit (36) outputs a termination signal after the basic filling operation of the pneumatic shock absorbing system (1) has taken place.

10. Pneumatic shock absorbing system (1) for a motor vehicle according to Claim 9, **characterized in that** the termination signal of the control unit (36) of the pneumatic shock absorbing system (1) is evaluated by further vehicle systems (80) in such a way that their functional capability can be matched to the functional capability of the pneumatic shock absorbing system (1).

11. Pneumatic shock absorbing system (1) for a motor vehicle according to one of the preceding claims, **characterized in that** the pneumatic shock absorbing system (1) is embodied with an open, semi-open or closed pneumatic circuit.

12. Pneumatic shock absorbing system (1) for a motor vehicle according to one of the preceding claims, **characterized in that** an air dryer (68) is arranged between the connecting line (8, 62, 64) of the pneumatic shock absorbing system (1) and the external pressure source (76).

13. Pneumatic shock absorbing system (1) for a motor vehicle according to Claim 12, **characterized in that** the air dryer (68) is dimensioned in such a way that a pressure dew point of the compressed air in the pneumatic shock absorbing system (1) of at least 20 kelvin with respect to the ambient temperature can be reached at the end of the basic filling operation.

14. Pneumatic shock absorbing system (1) for a motor vehicle according to Claim 13, **characterized in that** the pressure dew point of the compressed air in the pneumatic shock absorbing system (1) is at least 40 kelvin with respect to the ambient temperature at the end of the basic filling operation.

15. Pneumatic shock absorbing system (1) for a motor vehicle according to Claim 12, 13 or 14, **characterized in that** the humidity of the compressed air which is passed through the air dryer (68) between the connecting line (8, 62, 64) of the pneumatic shock absorbing system and the external pressure source (76) into the pneumatic shock absorbing system (1) is monitored by the control unit (36) of the pneumatic shock absorbing system (1).

16. Pneumatic shock absorbing system (1) for a motor vehicle according to Claim 15, **characterized in that** the filling process of the pneumatic shock absorbing system (1) is interrupted if the humidity of the compressed air in the pneumatic shock absorbing system
(1) exceeds a limiting value.

17. Pneumatic shock absorbing system (1) for a motor vehicle according to Claim 16, **characterized in that** the control unit (36) of the pneumatic shock absorbing system (1) initiates a regeneration operating mode of the air dryer (68) between the connecting line (8, 62, 64) of the pneumatic shock absorbing system (1) and the external pressure source (76).

18. Pneumatic shock absorbing system (1) for a motor vehicle according to Claim 17, **characterized in that** the control unit (36) of the pneumatic shock absorbing system (1) continues the interrupted filling process of the pneumatic shock absorbing system (1) if the regeneration of the air dryer (68) between the connecting line (8, 62, 64) of the pneumatic shock absorbing system (1) and the external pressure source (76) is terminated.

19. Method for performing open-loop and/or closed-loop control of the filling process of a pneumatic shock absorbing system (1) of a motor vehicle, **characterized in that** a pneumatic shock absorbing system (1) according to one of the preceding claims is used.

## Revendications

1. Système (1) de suspension pneumatique pour véhicule automobile, qui présente au moins un amortisseur pneumatique (18a, 18b, 18c, 18d) pour chaque roue du véhicule automobile d'au moins un essieu du véhicule, au moins un appareil de commande (36), au moins un compresseur (2), au moins une sonde de pression (10), au moins une soupape de commutation (20a, 20b, 20c, 20d) et au moins un conduit de liaison (8, 16a, 16b, 16c, 16d, 62, 64),
**caractérisé en ce que**
le conduit de liaison (8, 64) est relié à une source externe (76) d'air comprimé,
l'appareil de commande (36) du système (1) de suspension pneumatique reçoit un signal de démarrage pour son remplissage de base et
**en ce qu'**au moins une soupape (20a, 20b, 20c, 20d) est commandée par l'appareil de commande (36) de telle sorte que le remplissage de base d'au moins un composant (8, 16a, 16b, 16c, 16d, 18a, 18b, 18c, 18d, 62, 64) du système (1) de suspension pneumatique est réalisé avec l'air comprimé de la source externe (76) d'air comprimé.

2. Système (1) de suspension pneumatique pour véhicule automobile selon la revendication 1, **caractérisé en ce que** pendant le remplissage de base, la pression qui règne dans le système (1) de suspension pneumatique est surveillée au moyen d'un modèle.

3. Système (1) de suspension pneumatique pour véhicule automobile selon la revendication 1, **caractérisé en ce que** pendant le remplissage de base, la pression qui règne dans le système (1) de suspension pneumatique est surveillée de manière itérative à l'aide d'une sonde de pression (10).

4. Système (1) de suspension pneumatique pour véhicule automobile selon les revendications 1, 2 ou 3, **caractérisé en ce qu'**il présente au moins un réservoir sous pression (44) qui lors du remplissage de base peut être rempli d'air comprimé provenant de la source externe (76) d'air comprimé.

5. Système (1) de suspension pneumatique pour véhicule automobile selon la revendication 4,
**caractérisé en ce que**
le réservoir sous pression (44) est d'abord rempli d'air comprimé jusqu'à une pression prédéterminée,
**en ce qu'**alors, les amortisseurs pneumatiques (18a, 18b, 18c, 18d) sont remplis d'air comprimé jusqu'à la pression souhaitée de remplissage des amortisseurs pneumatiques et
**en ce qu'**ensuite, le réservoir sous pression (44) est rempli d'air comprimé jusqu'à la pression de remplissage du réservoir sous pression.

6. Système (1) de suspension pneumatique pour véhicule automobile selon la revendication 1 ou la revendication 4, **caractérisé en ce que** le compresseur (2) peut être alimenté par l'air comprimé de la source externe (76) d'air comprimé pour assister le remplissage de base du système (1) de suspension pneumatique.

7. Système (1) de suspension pneumatique pour véhicule automobile selon les revendications 1, 3, 4 ou 5,
**caractérisé en ce que** le remplissage de base du système (1) de suspension pneumatique est terminé lorsque la pression qui règne dans les différentes chambres (8, 12, 18a, 18b, 18c, 18d, 44) correspond à leur pression de consigne respective.

8. Système (1) de suspension pneumatique pour véhicule automobile selon l'une quelconque des revendications précédentes, **caractérisé en ce que** toutes les fonctions de régulation de niveau du système (1) de suspension pneumatique peuvent être libérées lorsque le remplissage de base est terminé.

9. Système (1) de suspension pneumatique pour véhicule automobile selon l'une quelconque des revendications précédentes, **caractérisé en ce que** l'appareil de commande (36) délivre un signal de fin lorsque le remplissage de base du système (1) de suspension pneumatique est terminé.

10. Système (1) de suspension pneumatique pour véhicule automobile selon la revendication 9, **caractérisé en ce que** le signal de fin de l'appareil de commande (36) du système (1) de suspension pneumatique est évalué par d'autres systèmes (80) du véhicule de manière à permettre d'accorder leur fonctionnement au fonctionnement du système (1) de suspension pneumatique.

11. Système (1) de suspension pneumatique pour véhicule automobile selon l'une quelconque des revendications précédentes, **caractérisé en ce que** le système (1) de suspension pneumatique est configuré avec un circuit pneumatique ouvert, semi-ouvert ou fermé.

12. Système (1) de suspension pneumatique pour véhicule automobile selon l'une quelconque des revendications précédentes, **caractérisé en ce qu'**un séchoir d'air (68) est disposé entre le conduit de liaison (8, 62, 64) du système (1) de suspension pneumatique et la source externe (76) de pression.

13. Système (1) de suspension pneumatique pour véhicule automobile selon la revendication 12, **caractérisé en ce que** le séchoir d'air (68) est dimensionné de telle sorte qu'à la fin du remplissage de base, un point de rosée sous pression de l'air comprimé présent dans le système (1) de suspension pneumatique écarté d'au moins 20 Kelvin par rapport à la température ambiante puisse être atteint.

14. Système (1) de suspension pneumatique pour véhicule automobile selon la revendication 13, **caractérisé en ce qu'**à la fin du remplissage de base, le point de rosée sous pression de l'air comprimé présent dans le système (1) de suspension pneumatique présente un écart d'au moins 40 Kelvin par rapport à la température ambiante.

15. Système (1) de suspension pneumatique pour véhicule automobile selon les revendications 12, 13 ou 14, **caractérisé en ce que** l'humidité de l'air comprimé qui est passé à travers le séchoir d'air (68) situé entre le conduit de liaison (8, 62, 64) du système de suspension pneumatique et la source externe (76) de pression dans le système (1) de suspension pneumatique est surveillée par l'appareil de commande (36) du système (1) de suspension pneumatique.

16. Système (1) de suspension pneumatique pour véhicule automobile selon la revendication 15, **caractérisé en ce que** l'opération de remplissage du système (1) de suspension pneumatique est interrompue si l'humidité de l'air comprimé présent dans le système (1) de suspension pneumatique dépasse une valeur limite.

17. Système (1) de suspension pneumatique pour véhicule automobile selon la revendication 16, **caractérisé en ce qu'**un fonctionnement de régénération du séchoir d'air (68) situé entre le conduit de liaison (8, 62, 64) du système (1) de suspension pneumatique et la source externe (76) de pression est lancé par l'appareil de commande (36) du système (1) de suspension pneumatique.

18. Système (1) de suspension pneumatique pour véhicule automobile selon la revendication 17, **caractérisé en ce que** l'opération interrompue de remplissage du système (1) de suspension pneumatique est reprise par l'appareil de commande (36) du système (1) de suspension pneumatique lorsque la régénération du séchoir d'air (68) disposé entre le conduit de liaison (8, 62, 64) du système (1) de suspension pneumatique et la source externe (76) de pression est terminée.

19. Procédé de commande et/ou de régulation de l'opération de remplissage d'un système (1) de suspension pneumatique d'un véhicule automobile, **caractérisé en ce qu'**il utilise un système (1) de suspension pneumatique selon l'une des revendications précédentes.
